# EUROPÄISCHE PATENTSCHRIFT

(11) **EP 0 461 210 B1**
(45) Veröffentlichungstag und Bekanntmachung des Hinweises auf die Patenterteilung: **25.05.1994**
(21) Anmeldenummer: 90915946.9
(22) Anmeldetag: 08.11.1990
(51) Int. Cl.: G03B 27/72, G03B 27/80

(54) **VORRICHTUNG ZUM BESTIMMEN EINES FARBFILTERWERTES FÜR DIE BELICHTUNG EINES GRADATIONSWANDELPAPIERES**
DEVICE FOR DETERMINING A COLOUR FILTER VALUE FOR THE EXPOSURE OF A GRADATION CONVERSION PAPER
DISPOSITIF POUR LA DETERMINATION DE L'INDICE D'UN FILTRE COLORE POUR L'EXPOSITION D'UN PAPIER MULTIGRADE

(30) Priorität: 22.12.1989 DE 3942635
(43) Veröffentlichungstag der Anmeldung: 18.12.1991
(73) Patentinhaber: bbs AG international, FL-9493 Mauren (LI); Brugger, Gerhard, D-83700 Rottach-Egern (DE); SCHMERLER, Detlev, FL-9493 Mauren (LI)
(72) Erfinder: BRUGGER, Gerhard, D-8183 Rottach-Egern (DE); SCHMERLER, Detlev, FL-9493 Mauren (LI)
(74) Vertreter: Schoppe, Fritz, Dipl.-Ing.
(86) Internationale Anmeldenummer: DE9000847
(87) Internationale Veröffentlichungsnummer: WO9110161

(56) Entgegenhaltungen:
- EP-A- 054 848
- GB-A- 1 539 468
- US-A- 3 800 070
- US-A- 4 885 607

## Beschreibung

Die Vorliegende Erfindung betrifft eine Vorrichtung zum Bestimmen eines für eine bestimmte Vorlage für die Belichtung eines Gradationswandelpapieres zu verwendenden Farbfilterwertes nach dem Oberbegriff des Patentanspruchs 1.

Bei der Herstellung von Schwarz-Weiß-Positivabzügen von Negativen mit zu starken oder zu geringen Kontrasten, die auch als zu harte oder zu weiche Negative bezeichnet werden, verwendet man zum Korrigieren dieser von den gewünschten Kontrastbereichen abweichenden Kontrastbereiche Fotopapiere mit verschiedenen Gradationen, also sogennante weiche bzw. harte Fotopapiere. Zur Kompensation eines zu harten Negativs verwendet man somit ein sogenanntes weiches Fotopapier, und umgekehrt. Sei einiger Zeit verwendet man zur Einstellung des gewünschten Kontrastes bei dem Positivabzug sogenannte Gradationswandelpapiere, die auch Multigrade-Papiere genannt werden, deren Gradation oder Kontrasteigenschaft von der Wellenlänge des verwendeten Belichtungslichtes abhängt. Somit kann die Gradation eines solchen Gradationswandelpapieres durch Vorschalten von verschiedenen Farbfilterkombinationen bei der Belichtung des Positivabzuges frei eingestellt werden. Gegenwärtig erfolgt die Wahl der für eine Kontrastbereichkorrektur eines zu harten oder zu weichen Negativs bei der Belichtung von Gradationswandelpapieren zu verwendenden Farbfilterwerte durch die Bedienungsperson, die den Farbfilterwert und die Dichte entsprechend ihrer Einschätzung der Negativkontraste festlegt. Da es naturgemäß schwierig ist, durch Betrachung eines Negativs die zu dem gewünschten Positivabzug führende Gradationsänderung festzulegen, kann die endgültige Einstellung der für die optimale Gradationsveränderung erforderlichen Farbfilterkombination bzw. des betreffenden Farbfilterwertes häufig erst dann erfolgen, wenn vorab ein Versuchsabzug mit einem ersten, noch unzutreffenden, von der Bedienungsperson grob geschätzten Farbfilterwert vorgenommen wurde.

Im Bereich der Herstellung von Farbabzügen aufgrund von Farbvorlagen, insbesondere Farbnegativen, ist es seit geraumer Zeit üblich, sich zur Festlegung der Farbfilterwerte, mit denen ein Abzug von einer bestimmten Vorlage gefertigt wird, eines sogenannten Videoanalyzers zu bedienen. Mit einem Videoanalyzer kann jedoch nicht der erforderliche Farbfilterwert für die Herstellung von Schwarz-Weiß-Abzügen mit Gradationswandelpapier festgelegt werden.

Aus der US-A-4,885,607 sind bereits ein Verfahren und eine Vorrichtung zum Auswählen eines geeigneten Filters aus einem Satz von Filtern mit veränderlichen Kontrasten für die Belichtung eines Papieres mit veränderlichem Kontrast, also eines sog. Gradationswandelpapieres bekannt. Die Vorrichtung umfaßt ein durchsichtiges Substrat mit einer Mehrzahl von Abschnitten, von denen ein jeder eine unterschiedliche Farbe hat, wobei diese Farbe jeweils einem bestimmten Filtergrad entspricht, wobei jeder dieser Bereiche die gleiche Dichte hat. Gemäß dem Verfahren wird das Gradationswandelpapier in den Kopierer eingelegt, woraufhin das Negativ in dem Kopierer auf dem Papier fokussiert wird. Dann wird das durchsichtige Substrat mit der beschriebenen Struktur aufgelegt, woraufhin das Papier über eine Zeitdauer belichtet wird, die größer als die Zeitdauer bei der Belichtung ohne das Kontrastfilter ist. Nach dem anschließenden Entwickeln des Papieres wird derjenige Abschnitt gewählt, der die besten Kontraste geliefert hat. Dieses Verfahren bedarf also regelmäßiger Herstellung von Probeabzügen.

Aus der US-A-3,800,070 ist eine Vorrichtung zum Bestimmen der Farblichtkomponenten für ein photographisches Kopiergerät bekannt, welche eine Farbkomponentenveränderungseinrichtung hat, und welche einen Monitor umfaßt, der ein Bild liefert, wobei dieses Monitorbild durch Einstellung der Farbkomponenten derart eingestellt wird, daß dessen Farbzusammensetzung derjenigen des gewünschten Bildes entspricht. Mit der Bestimmung von Farbfilterwerten für die Belichtung eines Gradationswandelpapieres befaßt sich diese Schrift nicht.

Aus der EP-A-054848 ist eine Vorrichtung zur automatischen Belichtung in einem Kopierer bekannt, die automatisch sowohl die Stellung von Farbkorrekturfiltern im Lampenhaus als auch die Belichtungszeit steuert. Auf einem Monitorbildschirm wird ein Farbfernsehbild erzeugt, wobei der Monitor von einem Rechner aufgrund der gemessenen Farbdichtewerte der Farbaufnahme so angesteuert, daß das Farbfernsehbild einer Wiedergabe zu erwartenden Kopie entspricht. Wenn das Farbfernsehbild als gut beurteilt wird, erfolgt die Belichtung mit den automatisch berechneten Kopier-Belichtungswerten. Anderenfalls wird eine Korrektur der Helligkeit und/oder der Farbbalance durchgeführt.

Ausgehend von diesem Stand der Technik liegt der vorliegenden Erfindung die Aufgabe zugrunde, eine Vorrichtung zum Bestimmen eines Farbfilterwertes für die Belichtung eines Gradationswandelpapieres zu schaffen, die eine ausreichend genaue Festlegung des erforderlichen Farbfilterwertes ermöglicht, ohne daß zu diesem Zweck Probeabzüge hergestellt werden müssen.

Diese Aufgabe wird erfindungsgemäß durch eine Vorrichtung mit den im Patentanspruch 1 angegebenen Merkmalen gelöst.

Die erfindungsgemäße Vorrichtung verfügt über eine Aufnahmevorrichtung zum Aufnehmen der Vorlage, eine der Aufnahmevorrichtung nachgeschaltete Umkehrschaltung zum Invertieren des von der Aufnahmevorrichtung gelieferten Aufnahmesignales, einen der Umkehrschaltung nachgeschalteten, in einer Schwarz-Weiß-Betriebsart arbeitenden Monitor, und eine elektronische Kontraststeuervorrichtung für den Monitor, die derart geeicht ist, daß jedem Einstellwert der elektronischen Kontraststeuervorrichtung ein Farbfilterwert eines bei der Belichtung des Gradationswandelpapieres zu verwendenden Farbfilters zugeordnet ist, mit dem ein Kontrast des Abzuges erzielt wird, der demjenigen des Monitorbildes entspricht.

Bei der Aufnahmevorrichtung kann es sich um einen Scanner zum Abtasten der Vorlage oder um eine Videokamera zum Aufnehmen der Vorlage handeln. Die Lichtquelle kann einen Farbmischkopf zum Belichten der Vorlage für Aufnahmen mit der Videokamera aufweisen.

Gemäß einem besonderen Aspekt der Erfindung liegt im Strahlengang der Aufnahmevorrichtung ein einschiebbares oder einschwenkbares Farbfilter, das in den Strahlengang des Scanners bzw. in den Strahlengang zwischen Farbmischkopf und Videokamera einschwenkbar oder einschiebbar ist, wobei die Kontraststeuervorrichtung in Abhängigkeit von dem Schwenkwinkel oder Einschubweg des Farbfilters eingestellt bzw. angesteuert wird. Bei dieser Form der erfindungsgemäßen Implementierung verstellt die Bedienungsperson nach Einlegen der Vorlage in die erfindungsgemäße Vorrichtung solange die Einstellung des mit der Kontraststeuervorrichtung gekoppelten Farbfilters, bis das Schwarz-Weiß-Monitorbild den gewünschten Kontrast zeigt. Bei dieser Einstellung des Farbfilters ergibt sich zwangsläufig bei der späteren Belichtung des Gradationswandelpapieres ein Abzug mit dem gewünschten Kontrastbereich, wie er vorab auf dem Monitorbild sichtbar war.

Nach einem weiteren, erheblichen Aspekt der vorliegenden Erfindung umfaßt die erfindungsgemäße Vorrichtung zum Bestimmen des Farbfilterwertes eine erste Farbmeßvorrichtung zum Bestimmen der Farbzusammensetzung des Belichtungslichtes, bei dem aufgrund der Farbfiltereinstellung sowie aufgrund der entsprechenden, zugehörigen Kontraststeuervorrichtungseinstellung der gewünschte Kontrast auf dem Monitor erzielt wird. An diesen Filterwert und gegebenenfalls Dichtewert kann die Filterung des Belichtungslichtes eines Vergrößerers oder Printers angeglichen werden, welcher mit einer zweiten Farbmeßvorrichtung ausgestattet ist, wobei dieses Angleichen der Farbtemperatur durch entsprechendes Einschwenken eines zweiten Farbfilters in den Strahlengang des Vergrößerers oder Printers geschieht. Bei übereinstimmenden Meßwerten von der ersten und zweiten Farbmeßvorrichtung ist sichergestellt, daß unabhängig von speziellen Eigenschaften der verwendeten Lichtquellen bzw. Farbmischköpfe in den Vergrößerern oder Printern Kontraste der Abzüge erzielt werden, die den Kontrasten und den Dichten der vorab betrachteten Monitorbilder entsprechen.

Nachfolgend werden unter Bezugnahme auf die beiliegenden Zeichnungen bevorzugte Ausführungsbeispiele der vorliegenden Erfindung näher erläutert. Es zeigen:
- Fig. 1: eine erste Ausführungsform der erfindungsgemäßen Bestimmungsvorrichtung für den Farbfilterwert; und
- Fig. 2: eine zweite Ausführungsform dieser Vorrichtung.

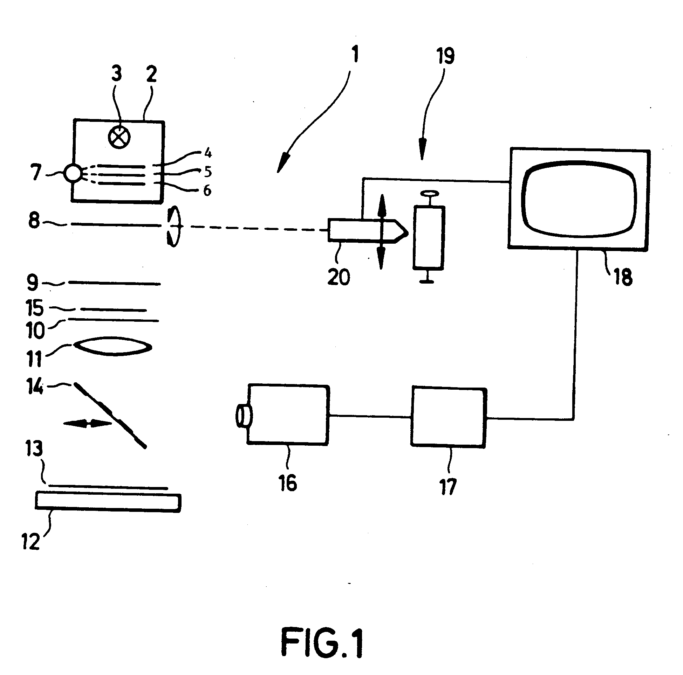

Die in Fig. 1 gezeigte, einfachste Ausführungsform der erfindungsgemäßen Vorrichtung zum Bestimmen eines für eine bestimmte Vorlage für die Belichtung eines Gradationswandelpapieres zu verwendenden Farbfilterwertes ist in ihrer Gesamtheit mit dem Bezugszeichen 1 bezeichnet. Die Vorrichtung umfaßt einen Farbmischkopf 2, welcher eine Lichtquelle 3 und einen Farbfiltersatz 4, 5, 6 mit zugehöriger Einstellvorrichtung 7 aufweist. Im Strahlengang hinter dem Farbmischkopf 2 liegt ein schwenkbares Multigradefarbfilter 8, welches um eine in Richtung des Strahlenganges liegende Achse drehbar angeordnet ist. Im Strahlengang hinter dem Multigradefarbfilter 8 kann eine Streuvorrichtung oder Milchglasscheibe 9 zum Vergleichmäßigen des Belichtungslichtes angeordnet sein. Hinter dieser liegt eine Vorlagenauflageplatte 10, auf die eine Vorlage, die im Beispielsfall ein SchwarzWeiß-Negativ sein kann, auflegbar ist.

Im Strahlengang ist hinter der Vorlagenauflageplatte 10 eine Optik 11 angeordnet, mittels der die Vorlage auf die Auflageebene einer Papierauflage 12 für ein zu belichtendes Gradationswandelpapier 13 abbildbar ist.

In den Strahlengang zwischen der Optik 11 und der Papierauflage 12 kann ein Spiegel 14 eingeschwenkt werden, über den die Vorlage 15 von einer Videokamera 16 oder einer anderen, geeigneten Aufnahmevorrichtung abtastbar ist. Die Videokamera 16 ist ausgangsseitig an eine Umkehrschaltung 17 angeschlossen, die das von der Videokamera 16 gelieferte Schwarz-Weiß-Bildsignal der Negativvorlage 15 invertiert. Die Umkehrschaltung 17 ist ausgangsseitig mit dem Videoeingang eines in einer Schwarz-Weiß-Betriebsart arbeitenden Monitors 18 verbunden.

Die Schwenkeinstellung des Multigradefarbfilters 8, die ein Maß der von dem Multigradefarbfilter 8 abgegebenen Farbtemperatur ist, wird von einem Potentiometer 19 erfaßt, dessen beweglicher Abgriff 20 mit dem Multigradefarbfilter 8 in Bewegungsverbindung steht. Bei einer bevorzugten, einfachen Ausführungsform liegt das Potentiometer 19 koaxial mit der Achse des schwenkbaren Multigradefarbfilters 8.

Das Ausgangssignal des Potentiometers 19 dient zur Ansteuerung einer elektronischen Kontraststeuervorrichtung des Monitors 18, die in den meisten Schwarz-Weiß-Monitoren vorgesehen ist, so daß auf deren Erläuterung verzichtet werden kann. Durch geeignete Art des Potentiometerwiderstandes, durch einen an den Abgriff angeschlossenen, diesem nachgeschalteten Spannungsteiler oder durch andere, an sich bekannte Maßnahmen zur Anpassung zweier Kurven aneinander, ist die elektronische Kontraststeuervorrichtung derart geeicht, daß jedem Einstellwert der elektronischen Kontraststeuervorrichtung ein Farbfilterwert eines bei der Belichtung des Gradationswandelpapieres zu verwendenden Farbfilters zugeordnet ist, mit dem ein Kontrast des Abzuges erzielt wird, der demjenigen des Monitorbildes entspricht.

In der Praxis kann eine deratige Eichung dadurch vorgenommen werden, daß zunächst ausgehend von einer beliebigen Vorlage bei mehreren, vorbestimmten Schwenkstellungen des Multigradefarbfilters 8 einmalig (nur für den Eichvorgang) eine entsprechende Mehrzahl von Probeabzügen gefertigt wird, woraufhin eine solche Einstellung des Potentiometers oder sonstiger Eichung der Kontraststeuervorrichtung vorgenommen wird, daß das Monitorbild bei diesen vorgegebenen Schwenkstellungen des Multigradefarbfilters 8 in seinem Kontrast demjenigen des der betreffenden Farbfiltereinstellung zugeordneten Probeabzuges entspricht.

Mit einem derart geeichten Gerät kann nun in einfacher Weise gearbeitet werden, indem nach Einlegen der Vorlage 15 und Einschwenken des Spiegels 14 in den Strahlengang der Schwenkwinkel des Multigradefarbfilters 8 solange verändert wird, bis das auf dem Monitor 18 wiedergegebene SchwarzWeiß-Bild den gewünschten Kontrastbereich hat. Bei dieser Einstellung des Multigradefarbfilters 8 wird der Spiegel 14 aus dem Strahlengang geschwenkt und ein Gradationswandelpapier 13 belichtet.

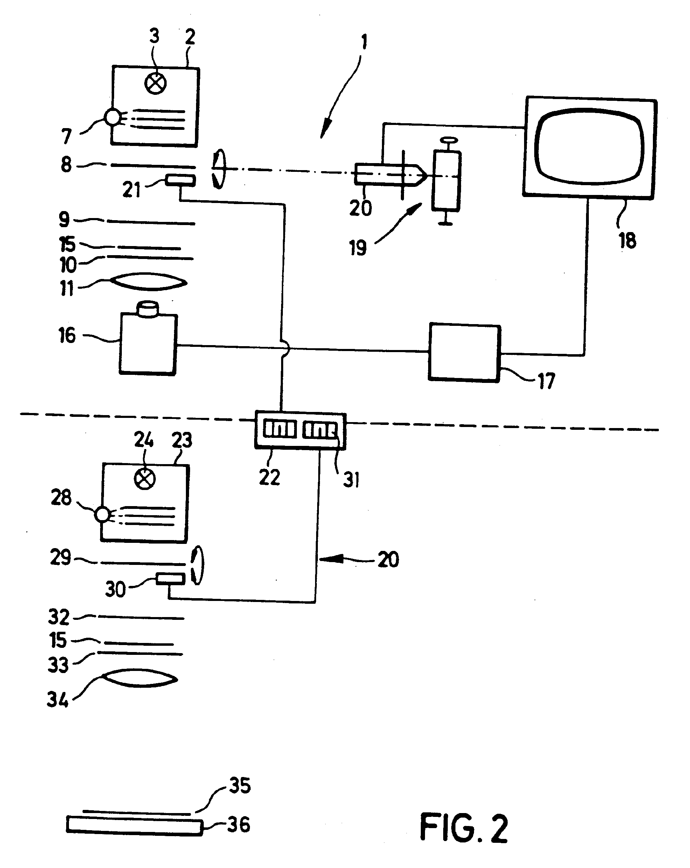

Nachfolgend wird unter Bezugnahme auf Fig. 2 eine zweite Ausführungsform erläutert, die einen von der Vorrichtung für die Bestimmung eines Farbfilterwertes, welche in ihrer Gesamtheit mit dem Bezugszeichen 1 bezeichnet ist, getrennt angeordneten Farbvergrößerer oder Farbprinter aufweist, der seinerseits mit dem Bezugszeichen 20 bezeichnet ist.

Die erstgenannte Vorrichtung 1 stimmt weitgehend mit der unter Bezugnahme auf Fig. 1 erläuterten Vorrichtung überein, so daß nachfolgend nur Abweichungen erläutert werden. Mit dem Ausführungsbeispiel der Fig. 1 übereinstimmende Teile sind mit dem gleichen Bezugszeichen versehen.

In Abweichung zu der Ausführungsform gemäß Fig. 1 sind bei der Vorrichtung 1 nach Fig. 2 kein Spiegel 14, keine Papierauflage 12 und kein Gradationswandelpapier 13 vorgesehen, da die Vorrichtung 1 bei dieser Ausführungsform allein der Vorlagenanalyse und nicht der Herstellung von Abzügen dient. Im Strahlengang des ersten Farbmischkopfes 2 dieser Vorrichtung 1 liegt hinter dem ersten Multigradefarbfilter 8 eine erste Farbmeßvorrichtung 21, mit der die Farbtemperatur des Lichtes gemessen wird, das sich bei einer solchen Einstellung des Multigradefarbfilters 8 ergibt, bei dem das Bild auf dem Monitor 18 den gewünschten Kontrast zeigt. Die so von der ersten Farbmeßvorrichtung gemessene Farbtemperatur wird beispielsweise auf einer ersten Anzeige 22 dargestellt.

Der Farbvergrößerer 20 umfaßt in an sich bekannter Weise einen zweiten Farbmischkopf 23, der eine Lichtquelle 24 und einen zweiten Farbfiltersatz 25, 26, 27 mit zugehöriger zweiter Einstellvorrichtung 28 aufweist. Im Strahlengang hinter dem zweiten Farbmischkopf liegt ein zweiter Multigradefarbfilter 29, der gleichfalls um eine in Richtung des Strahlenganges liegende Achse schwenkbar ist. Die Farbtemperatur des von diesem abgegebenen Belichtungslichtes wird von einer zweiten Farbmeßvorrichtung 30 erfaßt, die ausgangsseitig mit einer zweiten Anzeige 31 verbunden ist. Im Strahlengang hinter dem zweiten Multigradefarbfilter 29 liegt eine zweite Streuvorrichtung 32, die beispielsweise als Milchglasscheibe ausgeführt sein kann. Unterhalb dieser liegt eine zweite Vorlagenauflageplatte 33, auf die die Vorlage 15 nach ihrer Kontrastanalyse in der Vorrichtung 1 auflegbar ist. Die Vorlage wird über eine zweite Optik 34 auf eine Gradationswandelpapier 35 abgebildet, das auf eine zweite Papierauflage 36 aufgelegt ist.

Durch entsprechende Verstellung des zweiten Multigradefarbfilters 29 wird der Anzeigewert auf der zweiten Anzeige 31 mit dem vorherigen Anzeigewert auf der ersten Anzeige 22 in Übereinstimmung gebracht. Hierdurch ist sichergestellt, daß unabhängig von Eigenschaften des jeweils verwendeten Farbmischkopfes 23 das Belichtungslicht für die Belichtung des Gradationswandelpapieres 35 die gleiche Farbtemperatur hat wie dasjenige, mit dem die Vorlage 15 in der Vorrichtung 1 analysiert wurde. Somit ergeben sich bei der Herstellung des Abzuges mittels des Farbvergrößerers 20 unabhängig von den jeweiligen Farbmischkopfeigenschaften desselben zwangsläufig diejenigen Kontraste, die von der Bedienungsperson auf dem Monitor 18 als wünschenswert festgelegt wurden.

Der beschriebene Farbvergrößerer 20 hat ein zweites Multigradefarbfilter 29. Jedoch kann der Farbvergrößerer auch ohne ein derartiges Multigradefarbfilter ausgeführt sein, da allein über die Einstellung seiner Farbfilter 25, 26, 27 die gewünschte Farbzusammensetzung des Belichtungslichtes eingestellt werden kann.

Ebenfalls kann statt eines Farbmischkopfes eine einfache Lichtquelle mit nachgeschaltetem Multigradefarbfilter vorgesehen sein.

Bei den Ausführungsformen nach den Fig. 1 und 2 sind die Multigradefarbfilter schwenkbare, also um eine Achse drehbare Filter. Jedoch können ebenso statt verschwenkbarer Filter linear verschiebbare Filter eingesetzt werden.

Bei den beschriebenen Ausführungsformen dient ein Potentiometer zum Einstellen der Kontraststeuervorrichtung des Monitors 18. Für den Fachmann ist es offensichtlich, daß jegliche Art der Erfassung der Stellung des Multigradefarbfilters 8 anstelle des Potentiometers eingesetzt werden kann. So kann die Erfassung der Stellung des Multigradefarbfilters auch indirekt durch Bestimmung der Farbtemperatur des von diesem abgegebenen Licht erfolgen. Auch können optoelektronische Lageerfassungen für die Winkelstellung oder Translationsstellung des Farbfilters anstelle des mechanisch abtastenden Potentiometers vorgesehen sein.

## Patentansprüche

1. Vorrichtung zum Bestimmen eines für die Belichtung eines Gradationswandelpapieres mit einer bestimmten Vorlage zu verwendenden Farbfilterwertes, mit einer Lichtquelle (3) zum Belichten der Vorlage, mit einem verschiebbaren oder verschwenkbaren Farbfilter (8), das in den Strahlengang der Lichtquelle eingeschwenkt oder eingeschoben werden kann,
gekennzeichnet durch
eine elektronische Aufnahmevorrichtung (16) zum Aufnehmen eines Bildes der Vorlage (15),
eine negativ-positiv Umkehrschaltung (17) zum Invertieren des von der Aufnahmevorrichtung (16) gelieferten Aufnahmesignales,
einen der Umkehrschaltung (17) nachgeschalteten, in einer Schwarz-Weiß-Betriebsart arbeitsfähigen Monitor (18), der eine elektronische Kontraststeuervorrichtung enthält, und
Kontraststeuermittel (19), die aus der Position des Farbfilters (8) oder der Farbtemperatur des das Farbfilter durchscheinenden Lichts ein Filterpositionssignal erzeugen und damit die Kontraststeuervorrichtung des Monitors derart ansteuern, daß jedem Einstellwert der Kontraststeuervorrichtung eine Farbfilterposition entspricht, mit der bei der Belichtung des Gradationswandelpapieres (13, 35) ein Kontrast des Abzuges erzielt wird, der demjenigen des Monitorbildes entspricht.

2. Vorrichtung nach Anspruch 1, dadurch gekennzeichnet,
daß die Aufnahmevorrichtung eine Videokamera aufweist.

3. Vorrichtung nach Anspruch 1, dadurch gekennzeichnet,
daß die Lichtquelle (2) einen Farbmischkopf aufweist.

4. Vorrichtung nach Anspruch 1, gekennzeichnet durch
eine im Strahlengang hinter dem Farbfilter (8) angeordnete erste Farbmeßvorrichtung (21) zum Bestimmen der Farbtemperatur des Belichtungslichtes, bei dem aufgrund der Farbfiltereinstellung sowie aufgrund der entsprechenden Kontraststeuervorrichtungseinstellung der gewünschte Kontrast auf dem Monitor (18) erzielt wird.

5. Vorrichtung nach Anspruch 4, gekennzeichnet durch
eine im Strahlengang eines Vergrößerers (20) oder Printers hinter dessen Printer-Farbfilter (29) positionierbare zweite Farbmeßvorrichtung (30) zum Bestimmen der Farbtemperatur, deren Farbmeßwert durch Einschieben oder Einschwenken des Printer-Farbfilters (29) in den Strahlengang des Vergrößerers oder Printers in Übereinstimmung mit dem Farbmeßwert der ersten Farbmeßvorrichtung (21) bringbar ist.

6. Vorrichtung nach Anspruch 5, gekennzeichnet durch
eine Anzeigevorrichtung (22, 31), auf der sowohl die von der ersten Farbmeßvorrichtung (21) gemessene Farbtemperatur wie auch die von der zweiten Farbmeßvorrichtung (30) gemessene Farbtemperatur anzeigbar sind.

## Claims

1. An apparatus for determining a colour filter value which is to be used for the exposure of a gradation change paper for a specific original, said apparatus comprising a light source (3) for exposing the original and a displaceable or pivotable colour filter (8) which is adapted to be pivoted or slid into the ray path of the light source,
characterized by
an electronic recording device (16) used for recording an image of the original (15),
a negative-positive inverting circuit (17) used for inverting the recording signal supplied by the recording device (16),
a monitor (18) following said inverting circuit (17) and operating in a black-and-white mode of operation, said monitor including an electronic contrast control device, and
contrast control means (19) which produce a filter position signal on the basis of the position of the colour filter (8) or the colour temperature of the light shining through the colour filter and which, making use of said filter position signal, control the contrast control device of the monitor in such a way that each adjustment value of the contrast control device corresponds to a colour filter position by means of which a contrast of the print corresponding to that of the image on the monitor will be achieved when the gradation change paper (13, 35) is exposed.

2. An apparatus according to claim 1, characterized in
that the recording device comprises a video camera.

3. An apparatus according to claim 1, characterized in
that the light source (2) comprises a colour mixing head.

4. An apparatus according to claim 1, characterized by
a first colour measuring device (21) arranged behind the colour filter (8) in the ray path and used for determining the colour temperature of the exposure light in the case of which the desired contrast on the monitor (18) will be achieved on the basis of the setting of the colour filter as well as on the basis of the corresponding adjustment of the contrast control device.

5. An apparatus according to claim 4, characterized by
a second colour measuring device (30) for determining the colour temperature, which is adapted to be arranged in the ray path of an enlarger (20) or printer behind the printer colour filter (29) thereof and the measured colour value of which can be brought into correspondence with the measured colour value of the first colour measuring device (21) by sliding or swinging the printer colour filter (29) into the ray path of the enlarger or printer.

6. An apparatus according to claim 5, characterized by
a display device (22, 31), which is adapted to display thereon the colour temperature measured by said first colour measuring device (21) as well as the colour temperature measured by said second colour measuring device (30).

## Revendications

1. Dispositif pour la détermination de l'indice de filtre coloré à utiliser, avec un original déterminé, pour l'exposition d'un papier multigrade, avec une source lumineuse (3) pour l'exposition de l'original, avec un filtre coloré (8) déplaçable ou pivotable qui peut être pivoté ou inséré dans le trajet du faisceau lumineux de la source lumineuse, caractérisé par
un dispositif de prise de vues électronique (16) destiné à photographier une image de l'original (15),
un circuit de commutation négatif-positif (17) destiné à inverser le signal de prise de vues fourni par le dispositif de prise de vues (16),
un moniteur (18), connecté après le circuit d'inversion (17) et fonctionnant en mode de fonctionnement en noir et blanc, qui contient un dispositif de commande de constraste électronique,
des moyens de commande de contraste (19) qui génèrent, à partir de la position du filtre coloré (8) ou de la température de couleur de la lumière traversant le filtre coloré, un signal de position de filtre et, de ce fait, commandent le dispositif de commande de contraste du moniteur de telle manière qu'à chaque valeur de réglage du dispositif de commande de contraste correspond une position de filtre coloré avec laquelle est obtenu, lors de l'exposition du papier multigrade (13, 35), un contraste du tirage qui correspond à celui de l'image de moniteur.

2. Dispositif suivant la revendication 1, caractérisé en ce que le dispositif de prise de vues présente une caméra vidéo.

3. Dispositif suivant la revendication 1, caractérisé en ce que la source lumineuse (2) présente une tête de mélange de couleurs.

4. Dispositif suivant la revendication 1, caractérisé par un premier dispositif de mesure de couleur (21) disposé dans le trajet du faisceau lumineux, derrière le filtre coloré (8), destiné à déterminer la température de couleur de la lumière d'exposition à laquelle est obtenu au moniteur (18), sur base du réglage du filtre coloré ainsi que sur base du réglage correspondant du dispositif de commande de contraste, le contraste souhaité.

5. Dispositif suivant la revendication 4, caractérisé par un second dispositif de mesure de couleur (30) positionné sur le trajet du faisceau lumineux d'un agrandisseur (20) ou d'une imprimante, derrière son filtre coloré d'imprimante (29), destiné à déterminer la température de couleur et dont la valeur de mesure de couleur peut être amenée en correspondance avec la valeur de mesure de couleur du premier dispositif de mesure de couleur (21) en insérant ou en pivotant le filtre coloré d'imprimante (29) dans le trajet du faisceau lumineux de l'agrandisseur ou de l'imprimante.

6. Dispositif suivant la revendication 5, caractérisé par un dispositif de visualisation (22, 31) sur lequel peut être affichée tant la température de couleur mesurée par le premier dispositif de mesure de couleur (21) que la température de couleur mesurée par le second dispositif de mesure de couleur (30).
